(19) Europäisches Patentamt / European Patent Office / Office européen des brevets

(11) **EP 2 853 723 A1**

(12) **DEMANDE DE BREVET EUROPEEN**

(43) Date de publication:
01.04.2015 Bulletin 2015/14

(51) Int Cl.:
*F02D 41/00* (2006.01)     *G01F 1/36* (2006.01)

(21) Numéro de dépôt: **14186323.3**

(22) Date de dépôt: **25.09.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **26.09.2013  FR 1359307**

(71) Demandeur: **Valeo Systèmes de Contrôle Moteur 95800 Cergy (FR)**

(72) Inventeurs:
• **Lutz, Philippe**
  **78100 LE VESINET (FR)**
• **Potteau, Sébastien**
  **78510 TRIEL SUR SEINE (FR)**

(74) Mandataire: **Garcia, Christine**
  **Propriété Intellectuelle**
  **Valeo Systèmes de Contrôle Moteur**
  **14, avenue des Béguines**
  **95800 Cergy St Christophe (FR)**

(54) **Procede de determination du taux d'EGR dans un moteur thermique**

(57)     Procédé de détermination du taux d'EGR ($\tau_{EGR}$) dans un moteur (M) d'un ensemble (1) comprenant :
- ledit moteur, étant un moteur thermique (M) ayant une entrée reliée à un circuit d'admission (3) et une sortie reliée à un circuit d'échappement (4) et,
- une boucle de recirculation (20) s'étendant entre une entrée (22) dans le circuit d'échappement (4) et une sortie (23) dans le circuit d'admission (4), de manière à permettre à tout ou partie des gaz d'échappement circulant dans le circuit d'échappement (4) d'être réinjectés dans le circuit d'admission (3), ladite boucle (20) comprenant au moins une vanne (29),
procédé dans lequel :

- on mesure la valeur de la différence de pression aux bornes de la vanne (29) de la boucle de recirculation (20),
- on compare cette valeur de la différence de pression mesurée avec une valeur prédéfinie et,
- lorsque cette valeur de la différence de pression mesurée est supérieure à la valeur prédéfinie, on détermine le taux d'EGR dans le moteur (M) à l'aide de ladite valeur de la différence de pression, et lorsque cette valeur de la différence de pression mesurée est inférieure à la valeur prédéfinie, on détermine le taux d'EGR dans le moteur (M) à l'aide de la position de la vanne (29) de la boucle de recirculation (20) sans utiliser cette valeur de différence de pression mesurée.

Fig. 1

**Description**

La présente invention concerne la mesure du taux d'ERG (« recyclage des gaz d échappement »), encore appelé taux d'EGR (« exhaust gas recirculation » en anglais) dans un moteur thermique dont l'entrée est réliée à un circuit d'admission et dont la sortie est réliée à un circuit d'échappement. Ce taux d'EGR correspond à la proportion des gaz d'échappement présents dans les gaz d'admission entrant dans le répartiteur d'admission du moteur grâce à une boucle de recirculation s'étendant entre une entrée dans le circuit d'échappement et une sortie dans le circuit d'admission.

Au sens de la présente invention, « taux d'EGR dans le moteur » doit être compris comme signifiant « taux d'EGR entrant dans le répartiteur d'admission du moteur».

L'estimation du taux d'EGR dans le moteur thermique est souhaitable car ce taux détermine en partie les réglages à appliquer au moteur, par exemple l'avance à l'allumage, le débit de carburant ou la position d'une vanne ou papillon du circuit d'air du moteur thermique. La Déposante a déjà décrit dans la demande WO 2012/038639 un procédé de détermination du débit massique des EGR entrant dans le répartiteur d'admission du moteur thermique effectuée à l'aide de la formule de St Venant. Pour appliquer cette formule, qui prend en compte la valeur de la pression en amont et en aval d'une vanne disposée dans la boucle de recirculation et contrôlant le débit des gaz dans cette boucle, il est nécessaire que la différence entre ces deux valeurs de pression soit suffisante. Autrement, la valeur de débit massique obtenue à l'aide de la formule de St Venant n'est pas assez précise.

Une solution pour garantir une différence de pression suffisante aux bornes de cette vanne sur une large plage de fonctionnement du moteur est d'utiliser un doseur additionnel placé dans le circuit d'échappement en aval de l'entrée de la boucle de recirculation, comme enseigné par exemple dans la demande WO 2010/010246. Une telle solution est cependant coûteuse puisqu'elle nécessite l'ajout d'un composant dédié.

Il existe un besoin pour permettre d'estimer de façon fiable et peu coûteuse le taux d'EGR dans un moteur thermique.

L'invention vise à répondre à ce besoin et elle parvient selon l'un de ses aspects à l'aide d'un procédé de détermination du taux d'EGR dans un moteur d'un ensemble comprenant :

- ledit moteur, étant un moteur thermique ayant une entrée reliée à un circuit d'admission et une sortie reliée à un circuit d'échappement et,
- une boucle de recirculation s'étendant entre une entrée dans le circuit d'échappement et une sortie dans le circuit d'admission, de manière à permettre à tout ou partie des gaz d'échappement circulant dans le circuit d'échappement d'être réinjectés dans le circuit d'admission, ladite boucle comprenant au moins une vanne configurée pour passer d'une position fermée s'opposant à la réinjection des gaz d'échappement dans le circuit d'admission à au moins une position ouverte permettant ladite réinjection des gaz d'échappement,
  procédé dans lequel :
- on mesure la valeur de la différence de pression aux bornes de la vanne de la boucle de recirculation,
- on compare cette valeur de la différence de pression mesurée avec une valeur prédéfinie et,
- lorsque cette valeur de la différence de pression mesurée est supérieure à la valeur prédéfinie on détermine le taux d'EGR dans le moteur à l'aide de ladite valeur de la différence de pression, et lorsque cette valeur de la différence de pression mesurée est inférieure à la valeur prédéfinie, on détermine le taux d'EGR dans le moteur à l'aide de la position de la vanne de la boucle de recirculation sans utiliser cette valeur de différence de pression mesurée.

Selon le procédé ci-dessus, la détermination du taux d'EGR dans le moteur thermique en utilisant la valeur de la différence de pression aux bornes de la vanne n'est effectuée que lorsque cette valeur est supérieure à la valeur prédéfinie. Dans les autres cas, le taux d'EGR est déterminé sans avoir recours à la valeur de la différence de pression aux bornes de la vanne mais en utilisant la position de la vanne.

Il n'est ainsi pas nécessaire de garantir artificiellement une valeur minimale de différence de pression aux bornes de la vanne de la boucle de recirculation à l'aide d'un composant additionnel comme mentionné ci-dessus puisque, lorsque cette valeur de différence de pression est faible, on calcule le taux d'EGR différemment.

Le procédé peut permettre de garantir une valeur du taux d'EGR dans le moteur avec une imprécision en valeur absolue d'au plus 2% en régime stabilisé pour le moteur et d'au plus 3% en régime transitoire pour le moteur. Une telle précision peut permettre de garantir que la commande du moteur, par exemple la commande de l'avance à l'allumage, sera en accord avec le taux d'EGR réellement présent dans le moteur thermique.

La valeur prédéfinie utilisée pour sélectionner de quelle façon sera déterminé le taux d'EGR dans le moteur peut être comprise entre 5 mbar et 25 mbar, étant notamment de l'ordre de 15 mbar. La valeur prédéfinie peut dépendre de la précision du capteur utilisé pour mesurer la valeur de la différence de pression aux bornes de la vanne de la boucle de recirculation.. Avec une telle valeur prédéfinie, la détermination du taux d'EGR peut se faire à l'aide de la valeur de la différence de pression aux bornes de la vanne de la boucle de recirculation lorsque le moteur thermique est chargé, par exemple dans un cas d'accélération franche, tandis que la détermination du taux d'EGR peut se faire à l'aide de la position de ladite vanne et sans utilisation de ladite valeur de la différence de pression dans des conditions de roulage normal sans charge importante du moteur thermique.

Lorsque l'on détermine le taux d'EGR dans le moteur à l'aide de la valeur de la différence de pression mesurée aux bornes de la vanne de la boucle de recirculation, on peut utiliser la valeur du débit massique d'EGR dans la boucle de recirculation, ce débit étant calculé à l'aide de la formule de St Venant :

$$Q_{EGR} = S_{EGR} \times \frac{P_e}{\sqrt{r \times T_{EGR}}} \sqrt{\frac{2 \times \gamma}{\gamma - 1} \times \left[ \left(\frac{P_f}{P_e}\right)^{\frac{2}{\gamma}} - \left(\frac{P_f}{P_e}\right)^{\frac{\gamma+1}{\gamma}} \right]}$$

$T_{EGR}$ désignant la température des gaz d'échappement dans la boucle de recirculation en amont de la vanne,
$S_{EGR}$ désignant la section de passage des gaz d'échappement dans la boucle de recirculation au niveau de la vanne de la boucle de recirculation,
$P_e$ étant la pression des gaz d'échappement en amont de la vanne de la boucle de recirculation,
$P_f$ étant la pression des gaz d'échappement en aval de la vanne de la boucle de recirculation,
r étant la constante des gaz, de l'ordre de 287, et
$\gamma$ étant le gamma des gaz, de l'ordre de 1,37.

On peut ainsi appliquer la formule de St Venant pour déterminer le débit massique des gaz d'échappement dans la boucle de recirculation, et donc dans le moteur thermique.

La détermination de la pression $P_e$ des gaz d'échappement en amont de la vanne peut être effectuée à l'aide de la valeur mesurée pour la différence de pression aux bornes de ladite vanne, en :

- déterminant la pression $P_f$ des gaz d'échappement en aval de ladite vanne, et
- déterminant la pression $P_e$ des gaz d'échappement en amont de ladite vanne par addition de la pression $P_f$ en aval de ladite vanne et de la différence de pression aux bornes de la vanne de la boucle de recirculation.

Autrement dit, la valeur de la pression $P_e$ des gaz d'échappement en amont de ladite vanne peut être effectuée sans avoir recours à un capteur de pression disposé dans la boucle de recirculation en amont de la vanne. Un capteur de pression disposé en aval de ladite vanne, par exemple dans le circuit d'admission entre la sortie de la boucle de recirculation et le répartiteur d'admission du moteur, et le capteur de pression mesurant la différence de pression aux bornes de ladite vanne peuvent être les seuls capteurs de pression utilisés pour déterminer le taux d'EGR dans le moteur.

Connaissant le débit massique $Q_{EGR}$ des gaz d'échappement dans le moteur, le taux d'EGR peut être calculé à l'aide de l'équation suivante :

$$\tau_{EGR} = \frac{Q_{EGR}}{Q_{adm}}$$

$\tau_{EGR}$ désignant le taux d'EGR dans le moteur,
$Q_{adm}$ désignant le débit massique des gaz à l'admission du moteur thermique
$Q_{adm}$ peut être déterminé à l'aide d'un débitmètre placé dans le circuit d'admission en amont du répartiteur d'admission du moteur thermique.

Dans une variante, et lorsqu'un compresseur de turbocompresseur est interposé entre la sortie de la boucle de recirculation et le répartiteur d'admission du moteur thermique, le débit massique des gaz à l'admission du moteur thermique peut être déterminé à l'aide du débit massique du compresseur. Le débit massique du compresseur peut être obtenu dès lors que l'on connaît la vitesse de rotation du compresseur, la pression à l'entrée du compresseur, encore appelée pression d'alimentation Pa, la pression à la sortie du compresseur, encore appelée pression de suralimentation Ps, et une courbe caractéristique du compresseur reliant entre eux : le rapport de pression Pa/Ps, la vitesse de rotation, et le débit massique du compresseur.

Le débit massique du compresseur est par exemple égal à $Q_{adm}$.

Selon le procédé, la détermination du taux d'EGR dans le moteur à l'aide de la position de la vanne de la boucle de recirculation, peut être effectuée en utilisant l'équation

$$\tau_{EGR} = \frac{S_{EGR}/\sqrt{T_{EGR}}}{\dfrac{S_{EGR}}{\sqrt{T_{EGR}}} + \dfrac{S_{air}}{\sqrt{T_{air}}}}$$

$\tau_{EGR}$ désignant toujours le taux d'EGR dans le moteur,
$S_{EGR}$ désignant toujours la section de passage des gaz d'échappement dans la boucle de recirculation au niveau de la vanne de la boucle de recirculation,
$T_{air}$ désignant la température de l'air dans le circuit d'admission en amont de la sortie de la boucle de recirculation, et
$S_{air}$ désignant la section de passage de l'air dans le circuit d'admission en amont de la sortie de la boucle de recirculation.

Dans tout ce qui précède, la valeur de la section de passage $S_{EGR}$ des gaz d'échappement dans la boucle de recirculation au niveau de la vanne peut être déterminée à l'aide de la position de ladite vanne, cette position étant par exemple connue par le biais d'un capteur de position implanté dans ladite vanne.

La position de la vanne est par exemple caractérisée par l'angle formé entre un volet de la vanne obturant sélectivement la boucle de recirculation et l'axe selon lequel s'étend la portion de la boucle de recirculation recevant la vanne. Lorsque la vanne est fermée, c'est-à-dire lorsqu'elle ne permet pas aux gaz d'échappement d'être réinjectés à l'admission du moteur thermique, cet angle fait par exemple 90°, alors que lorsque la vanne est dans la position de pleine ouverture, cet angle est sensiblement égal à 0°.

L'ensemble peut comprendre un turbocompresseur, formé par une turbine solidaire d'un compresseur.

L'ensemble peut par ailleurs comprendre un compresseur électrique pouvant être utilisé dans les phases transitoires pour seconder le turbocompresseur et palier à son temps de réponse.

La boucle de recirculation peut être une boucle EGR basse pression, c'est-à-dire que l'entrée dans le circuit d'échappement de la boucle de recirculation peut être disposée en aval de la turbine du turbocompresseur et que la sortie dans le circuit d'admission de la boucle de recirculation peut être disposée en amont du compresseur du turbocompresseur.

En variante, la boucle de recirculation peut être une boucle haute pression, c'est-à-dire que l'entrée dans le circuit d'échappement de la boucle de recirculation peut être disposée en amont de la turbine du turbocompresseur et que la sortie dans le circuit d'admission de la boucle de recirculation peut être disposée en aval du compresseur du turbocompresseur. Le moteur thermique est par exemple un moteur à essence. En variante, il peut s'agir d'un moteur diesel ou d'un moteur polycarburant. Le moteur peut fonctionner avec du « flex-fuel », du biocarburant ou du gpl.

Le moteur thermique peut être un moteur de véhicule automobile.

La vanne de la boucle de recirculation est par exemple une vanne indépendante, encore appelée « vanne deux voies ».

La boucle de recirculation peut comprendre un refroidisseur, notamment un refroidisseur à eau. Ce refroidisseur peut être disposé entre l'entrée de ladite boucle et la vanne de ladite boucle.

Un refroidisseur peut par ailleurs être disposé dans le circuit d'admission entre la sortie de la boucle de recirculation et le répartiteur d'admission du moteur.

En plus du capteur permettant de mesurer la différence de pression aux bornes de la vanne de la boucle de recirculation, ladite boucle peut comprendre un capteur de température tel qu'un thermocouple disposé entre l'entrée de ladite boucle et ladite vanne. Lorsque la boucle de recirculation comprend un refroidisseur, le capteur de température peut être positionné entre le refroidisseur et ladite vanne.

Dans tout ce qui précède, les seuls capteurs utilisés dans la boucle de recirculation peuvent être :

- le capteur fournissant la valeur de la différence de pression aux bornes de ladite vanne,
- le capteur fournissant la valeur de la température en amont de ladite vanne, et
- un capteur permettant de déterminer la position de ladite vanne, notamment un capteur permettant de déterminer l'angle formé entre le volet de la vanne obturant sélectivement la boucle de recirculation et l'axe selon lequel s'étend la portion de la boucle de recirculation recevant la vanne, comme mentionné ci-dessus.

Seuls les capteurs mentionnés ci-dessus interagissent alors directement avec des grandeurs associées à l'écoulement des gaz d'échappement dans la boucle de recirculation.

L'ensemble peut être dépourvu d'une vanne disposée dans le circuit d'échappement en aval de l'entrée de la boucle de recirculation, et apte à augmenter la différence de pression aux bornes de la vanne de la boucle de recirculation.

En variante ou en combinaison de ce qui précède immédiatement, l'ensemble peut être dépourvu d'une vanne disposée dans le circuit d'admission en amont de la sortie de la boucle de recirculation, et apte à augmenter la différence de pression aux bornes de la vanne de la boucle de recirculation.

L'invention a encore pour objet, selon un autre de ses aspects, un dispositif pour la mise en oeuvre du procédé défini ci-dessus, le dispositif étant configuré pour :

- comparer la valeur de la différence de pression aux bornes da la vanne de la boucle de recirculation avec une valeur prédéfinie et,
- lorsque la valeur de la différence de pression mesurée est supérieure à la valeur prédéfinie, déterminer le taux d'EGR dans le moteur à l'aide de ladite valeur de différence de pression, et lorsque la valeur de la différence de pression mesurée est inférieure à la valeur prédéfinie, déterminer le taux d'EGR dans le moteur à l'aide de la position de la vanne de la boucle de recirculation, sans utiliser ladite valeur de la différence de pression.

Tout ou partie des caractéristiques mentionnées ci-dessus en rapport avec le procédé s'appliquent au dispositif.

L'invention pourra être mieux comprise à la lecture de la description qui va suivre d'exemples non limitatifs de mise en oeuvre de celle-ci et à l'examen du dessin annexé sur lequel :

- la figure 1 représente de façon schématique un ensemble au sein duquel peut être mise en oeuvre l'invention, et
- la figure 2 est un diagramme « couple/vitesse » du moteur de la figure 1 montrant la zone dans laquelle le taux d'EGR dans le moteur est déterminé en fonction de la valeur de la différence de pression aux bornes de la vanne de la boucle de recirculation, et la zone dans laquelle le taux d'EGR dans le moteur est déterminé en fonction de la position de ladite vanne.

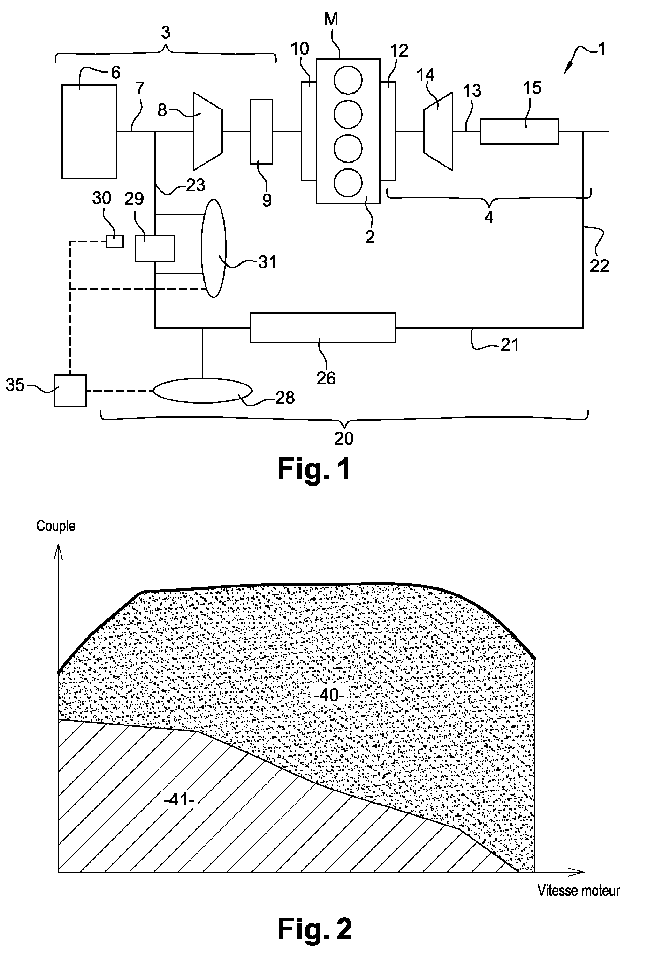

On a représenté à la figure 1 un ensemble 1 dans lequel peut être mise en oeuvre une détermination selon l'invention du taux d'EGR dans un moteur thermique M. Cet ensemble 1 est dans l'exemple considéré intégré à un véhicule et comprend un moteur thermique M à combustion interne. Le moteur M comporte une chambre de combustion 2 comportant une pluralité de cylindres, au nombre de quatre dans l'exemple décrit, et elle est destinée à recevoir un mélange de comburant et de carburant. Dans l'exemple décrit, le carburant est de l'essence mais l'invention n'est pas limitée à un tel exemple de carburant, pouvant aussi s'appliquer à l'emploi de diesel comme carburant, par exemple.

Le moteur M a une entrée reliée à un circuit d'admission 3 et une sortie reliée à un circuit d'échappement 4.

Le circuit d'admission 3 comporte dans l'exemple considéré un filtre à air 6 et un conduit 7 d'admission pour l'air frais. Le circuit d'admission 3 comprend encore dans cet exemple un compresseur 8 de turbocompresseur, et un refroidisseur 9, permettant le refroidissement des gaz issus du compresseur 8. Ce refroidisseur 9 est communément appelé "RAS", ce qui signifie "refroidisseur d'air de suralimentation". La sortie du refroidisseur 9 est reliée au répartiteur d'admission 10 du moteur M, permettant aux gaz de gagner la chambre de combustion 2 du moteur M.

Le circuit 4 d'échappement comporte, en sortie de la chambre de combustion 2 du moteur M, un répartiteur d'échappement 12 qui est relié à un conduit 13 d'échappement. Le circuit d'échappement 4 comporte par ailleurs une turbine 14 de turbocompresseur, solidaire en rotation du compresseur 8 du circuit d'admission. La turbine 14 est entraînée par les gaz d'échappement circulant dans le circuit d'échappement 4. La sortie de la turbine 14 est ici reliée à un catalyseur 15 qui est lui-même relié à la sortie du circuit d'échappement 4.

L'ensemble 1 comprend encore une boucle de recirculation 20 permettant à tout ou partie des gaz d'échappement circulant dans le circuit d'échappement 4 d'être réinjectés dans le moteur M. Cette boucle de recirculation comporte un conduit 21 s'étendant entre une entrée 22 dans le circuit d'échappement 3 et une sortie 23 dans le circuit d'admission 3. L'entrée 22 de la boucle de recirculation 20, par laquelle des gaz d'échappement du circuit d'échappement 4 sont prélevés, est dans l'exemple considéré disposée en aval du catalyseur 15.

La sortie 23 de la boucle de recirculation, par laquelle des gaz d'échappement sont réinjectés en amont du moteur M, est dans l'exemple considéré disposée entre le filtre à air 6 et le compresseur 8. La boucle de recirculation 20 est dans cet exemple une boucle basse pression puisque les gaz d'échappement circulant dans cette boucle 20 sont prélevés en sortie du circuit d'échappement 4 en aval de la turbine 14, où ils sont à relativement basse pression.

Comme on peut le voir sur la figure 1, la boucle 20 comprend dans l'exemple considéré un refroidisseur 26 des gaz d'échappement circulant dans cette la boucle 20

La boucle 20 comprend encore dans l'exemple considéré un capteur de température 28 et qui est ici disposé en aval du refroidisseur 26, en amont d'une vanne 29 qui permet de contrôler le débit des gaz d'échappement dans la boucle 20.

Dans l'exemple de la figure 1, la vanne 29 est une vanne indépendante, encore appelée « vanne simple ». Cette vanne 29 est configurée pour passer d'une position fermée dans laquelle aucun gaz ne peut circuler dans la boucle de recirculation 20 à plusieurs positions ouvertes, différant l'une par rapport à l'autre par le degré d'ouverture de ladite vanne 29. La vanne 29 peut par exemple être configurée pour ne présenter qu'un nombre prédéfini de positions ouvertes, par exemple trois ou quatre. Cette vanne 29 comporte un volet non représenté sur la figure 1.

La vanne 29 est disposée dans une portion rectiligne du conduit 21, et la position de cette vanne 29 peut être caractérisée par l'angle que fait le volet avec l'axe de ladite portion de la conduite 21. Dans l'exemple considéré, lorsque la vanne 29 est en position fermée, l'angle formé entre le volet et ledit axe vaut 90°, tandis que lorsque la vanne 29 est en position de pleine ouverture, cet angle peut être nul.

Afin de déterminer la position de la vanne 29, un capteur 30 délivrant une valeur d'une grandeur représentative de la position de la vanne 29 peut être utilisé. Cette grandeur permet par exemple de déterminer le degré d'ouverture de la vanne, exprimé par l'angle que fait la volet avec ledit axe, comme expliqué ci-dessus.

Comme représenté sur la figure 1, un capteur 31 mesurant la différence de pression aux bornes de la vanne 29 peut être utilisé.

La boucle de recirculation 20 peut être dépourvue de tout autre capteur que le capteur de température 28, le capteur 30 permettant de déterminer la position de la vanne 29, et le capteur 31 mesurant la différence de pression aux bornes de ladite vanne 29.

Un autre capteur non représenté peut être présent dans le circuit d'admission 3, ce capteur étant notamment disposé en amont du compresseur 8 et en aval de la sortie 23 de la boucle de recirculation 20.

L'ensemble comprend un dispositif 35 de détermination du taux d'EGR qui peut ou non être intégré à l'unité de contrôle moteur (ECU) du véhicule. Le dispositif 35 met par exemple en oeuvre une unité de traitement numérique, par exemple un ou plusieurs microcontrôleurs.

Afin de déterminer le taux d'EGR dans le moteur M, le dispositif 35 effectue tout d'abord une comparaison entre la valeur de différence de pression fournie par le capteur 31 et une valeur prédéfinie, notamment imposée par l'unité de contrôle moteur du véhicule. Cette valeur prédéfinie est par exemple de l'ordre de 15 mbar.

Lorsque la valeur de différence de pression fournie par le capteur 31 est supérieure à la valeur prédéfinie, le dispositif 35 est configuré pour déterminer le taux d'EGR dans le moteur M en utilisant cette valeur fournie par le capteur 31.

Cette détermination repose par exemple sur la détermination du débit massique d'EGR dans la boucle de recirculation 20, ce débit étant notamment calculé à l'aide de la formule de St Venant :

$$Q_{EGR} = S_{EGR} \times \frac{P_e}{\sqrt{r \times T_{EGR}}} \sqrt{\frac{2 \times \gamma}{\gamma - 1} \times \left[ \left(\frac{P_f}{P_e}\right)^{\frac{2}{\gamma}} - \left(\frac{P_f}{P_e}\right)^{\frac{\gamma+1}{\gamma}} \right]}$$

$T_{EGR}$ désignant la température des gaz d'échappement dans la boucle de recirculation 20 en amont de la vanne 29, cette température étant fournie ici par le capteur de température 28, $S_{EGR}$ désignant la section de passage des gaz d'échappement dans la boucle de recirculation 20 au niveau de la vanne 29,

$P_e$ étant la pression des gaz d'échappement en amont de la vanne 29,

$P_f$ étant la pression des gaz d'échappement en aval de la vanne 29, cette pression étant par exemple déterminée par le capteur de pression disposé dans le circuit d'admission 3 entre la sortie 23 de la boucle 20 et le compresseur 8,

$r$ étant la constante des gaz, de l'ordre de 287, et

$\gamma$ étant le gamma des gaz, de l'ordre de 1,37.

La détermination de la pression $P_e$ des gaz d'échappement en amont de la vanne 29 peut être effectuée à l'aide de la valeur fournie par le capteur 31 pour la différence de pression aux bornes de la vanne 29, en :

- utilisant la valeur de la pression $P_f$ des gaz d'échappement en aval de la vanne 29 connue à l'aide du capteur de pression disposé dans le circuit d'admission 3 et mentionné ci-dessus, et

- déterminant la pression $P_e$ des gaz d'échappement en amont de la vanne 29 par addition de la pression $P_f$ en aval de ladite vanne et de la valeur fournie par le capteur 31.

Ce débit massique $Q_{EGR}$ est alors égal au débit massique dans le moteur M des gaz d'échappement issus de la boucle de recirculation 20, de sorte que le taux d'EGR peut être calculé à l'aide de l'équation suivante :

$$\tau_{EGR} = \frac{Q_{EGR}}{Q_{adm}}$$

$\tau_{EGR}$ désignant le taux d'EGR dans le moteur,

$Q_{adm}$ désignant le débit massique des gaz à l'admission du moteur thermique M.

Dans l'exemple décrit, $Q_{adm}$ est notamment déterminé à l'aide du débit massique du compresseur 8. A l'aide d'un capteur mesurant la vitesse de rotation du compresseur 8 et de capteurs mesurant respectivement la pression d'entrée Pa et la pression de sortie Ps du compresseur 8, on peut utiliser une courbe caractéristique du compresseur reliant entre eux : le rapport de pression Pa/Ps, la vitesse de rotation, et le débit massique du compresseur.

Connaissant les pressions Pa, Ps et la vitesse de rotation du compresseur 8, on en déduit le débit massique du compresseur. En considérant que ce débit massique du compresseur est égal à $Q_{adm}$, on en déduit le taux d'EGR dans le moteur.

Le dispositif 35 est par ailleurs configuré pour, lorsque la valeur de différence de pression fournie par le capteur 31 est inférieure à la valeur prédéfinie, déterminer le taux d'EGR dans le moteur autrement qu'à l'aide de cette valeur de différence de pression.

Dans un tel cas, la détermination du taux d'EGR dans le moteur M s'effectue à l'aide de la position de la vanne 29.

Pour déterminer le taux d'EGR $\tau_{EGR}$, on peut utilise l'équation suivante :

$$\tau_{EGR} = \frac{Q_{EGR}}{Q_{EGR} + Q_{air}}$$

$Q_{air}$ désignant le débit massique d'air frais dans le circuit d'admission 3 en amont de la sortie 23 de la boucle de recirculation 20.

D'après la formule de Bernoulli, le débit massique Q est lié à la section de passage S, à la masse volumique p et à la variation de pression $\Delta P$ comme suit :

$$Q_{EGR} = S_{EGR} \times \sqrt{2 \times \rho_{EGR} \times \Delta P_{EGR}}$$

$$Q_{air} = S_{air} \times \sqrt{2 \times \rho_{air} \times \Delta P_{air}}$$

En considérant que $\Delta P_{EGR}$ et $\Delta P_{air}$ sont sensiblement égaux et en considérant que l'air et les gaz d'échappement sont des gaz parfaits, l'équation exprimant le taux d'EGR dans le moteur se simplifie en

$$\tau_{EGR} = \frac{S_{EGR}/\sqrt{T_{EGR}}}{\frac{S_{EGR}}{\sqrt{T_{EGR}}} + \frac{S_{air}}{\sqrt{T_{air}}}}$$

$S_{EGR}$ désignant toujours la section de passage des gaz d'échappement dans la boucle 20 au niveau de la vanne 29, $T_{air}$ désignant la température de l'air dans le circuit d'admission 3 en amont de la sortie 23 de la boucle 20, et $S_{air}$ désignant la section de passage de l'air frais dans le circuit d'admission 3 en amont de la sortie 23 de la boucle 20.

La section de passage $S_{air}$ étant connue, de même que la température $T_{air}$, et que la température $T_{EGR}$ grâce au capteur de température 28, il suffit pour déterminer le taux d'EGR dans le moteur, de connaître la valeur de $S_{EGR}$.

Cette valeur de $S_{EGR}$ est déterminée par le dispositif 35 à l'aide de la position de la vanne 29, cette dernière étant par exemple connue grâce au capteur 30 déjà mentionné.

On utilise par exemple dans ce but la valeur de l'angle formé entre le volet de la vanne 29 et l'axe selon lequel s'étend la portion du conduit 21 recevant la vanne 29.

On peut ainsi déterminer de façon fiable le taux d'EGR sans avoir à utiliser la valeur de la différence de pression aux bornes de la vanne 29, lorsque cette dernière est trop faible.

On a représenté sur la figure 2 sous forme d'un diagramme « couple/vitesse du moteur » :

- la zone 40 dans laquelle la détermination du taux d'EGR dans le moteur s'effectue à l'aide de la valeur de la différence de pression aux bornes de la vanne 29, et
- la zone 41 dans laquelle la détermination du taux d'EGR dans le moteur s'effectue à l'aide de la position de la vanne 29. Comme on peut le voir, la zone 40 concerne essentiellement les cas correspondant à une demande de couple élevée tandis que la zone 41 concerne essentiellement les cas correspondant à une demande de couple plus faible.

L'invention n'est pas limitée à l'exemple qui vient d'être décrit.

L'expression « comportant un » doit être comprise comme étant synonyme de l'expression « comportant au moins un », sauf lorsque le contraire est spécifié.

**Revendications**

1. Procédé de détermination du taux d'EGR ($\tau_{EGR}$) dans un moteur (M) d'un ensemble (1) comprenant :

   - ledit moteur, étant un moteur thermique (M) ayant une entrée reliée à un circuit d'admission (3) et une sortie reliée à un circuit d'échappement (4) et,
   - une boucle de recirculation (20) s'étendant entre une entrée (22) dans le circuit d'échappement (4) et une sortie (23) dans le circuit d'admission (4), de manière à permettre à tout ou partie des gaz d'échappement circulant dans le circuit d'échappement (4) d'être réinjectés dans le circuit d'admission (3), ladite boucle (20) comprenant au moins une vanne (29) configurée pour passer d'une position fermée s'opposant à la réinjection des gaz d'échappement dans le circuit d'admission (3) à au moins une position ouverte permettant ladite réinjection des gaz d'échappement,
   procédé dans lequel :

   - on mesure la valeur de la différence de pression aux bornes de la vanne (29) de la boucle de recirculation (20),
   - on compare cette valeur de la différence de pression mesurée avec une valeur prédéfinie et,
   - lorsque cette valeur de la différence de pression mesurée est supérieure à la valeur prédéfinie, on détermine le taux d'EGR dans le moteur (M) à l'aide de ladite valeur de la différence de pression, et lorsque cette valeur de la différence de pression mesurée est inférieure à la valeur prédéfinie, on détermine le taux d'EGR dans le moteur (M) à l'aide de la position de la vanne (29) de la boucle de recirculation (20) sans utiliser cette valeur de différence de pression mesuré.

2. Procédé selon la revendication 1, dans lequel la valeur prédéfinie est comprise entre 5 mbar et 25 mbar, étant notamment supérieure à 15 mbar

3. Procédé selon la revendication 1 ou 2, dans lequel lorsque l'on détermine le taux d'EGR dans le moteur à l'aide de la valeur de la différence de pression mesurée aux bornes de la vanne (29) de la boucle de recirculation (20), on utilise la valeur du débit massique des gaz d'échappement ($Q_{EGR}$) dans la boucle de recirculation (20), ce débit massique étant calculé à l'aide de la formule :

$$Q_{EGR} = S_{EGR} \times \frac{P_e}{\sqrt{r \times T_{EGR}}} \sqrt{\frac{2 \times \gamma}{\gamma - 1} \times \left[\left(\frac{P_f}{P_e}\right)^{\frac{2}{\gamma}} - \left(\frac{P_f}{P_e}\right)^{\frac{\gamma+1}{\gamma}}\right]}$$

$T_{EGR}$ désignant la température des gaz d'échappement dans la boucle de recirculation (20) en amont de ladite vanne (29),
$S_{EGR}$ désignant la section de passage des gaz d'échappement dans la boucle de recirculation (20) au niveau de ladite vanne (29),
$P_e$ étant la pression des gaz d'échappement en amont de ladite vanne (29),
$P_f$ étant la pression des gaz d'échappement en aval de ladite vanne (29),
$r$ étant la constante des gaz, de l'ordre de 287, et
$\gamma$ étant le gamma des gaz, de l'ordre de 1,37.

4. Procédé selon l'une quelconque des revendications précédentes, dans lequel lorsque l'on détermine le taux d'EGR dans le moteur (M) à l'aide de la position de la vanne (29) de la boucle de recirculation (20), on utilise l'équation

$$\tau_{EGR} = \frac{S_{EGR}/\sqrt{T_{EGR}}}{\frac{S_{EGR}}{\sqrt{T_{EGR}}} + \frac{S_{air}}{\sqrt{Tair}}}$$

$\tau_{EGR}$ désignant le taux d'EGR dans le moteur,

$S_{EGR}$ désignant la section de passage des gaz d'échappement dans la boucle de recirculation (20) au niveau de ladite vanne (29),

$T_{air}$ désignant la température de l'air dans le circuit d'admission (3) en amont de la sortie (23) de la boucle de recirculation (20), et

$S_{air}$ désignant la section de passage de l'air dans le circuit d'admission (3) en amont de la sortie (23) de la boucle de recirculation (20).

5. Procédé selon la revendication précédente, dans lequel on détermine la valeur de la section de passage ($S_{EGR}$) des gaz d'échappement dans la boucle de recirculation (20) au niveau de ladite vanne (29) à l'aide de la position de ladite vanne (29)

6. Procédé selon l'une quelconque des revendications précédentes, dans lequel la boucle de recirculation (20) est une boucle basse pression.

7. Procédé selon l'une quelconque des revendications précédentes, dans lequel le moteur thermique (M) est un moteur à essence.

8. Procédé selon l'une quelconque des revendications précédentes, dans lequel le moteur thermique est un moteur de véhicule automobile.

9. Dispositif (35) pour la mise en oeuvre du procédé selon l'une quelconque des revendications précédentes, le dispositif étant configuré pour :

    - comparer la valeur de la différence de pression aux bornes da la vanne (29) de la boucle de recirculation (20) avec une valeur prédéfinie et,
    - lorsque la valeur de la différence de pression mesurée est supérieure à la valeur prédéfinie, déterminer le taux d'EGR dans le moteur (M) à l'aide de ladite valeur de différence de pression, et lorsque la valeur de la différence de pression mesurée est inférieure à la valeur prédéfinie, déterminer le taux d'EGR dans le moteur (M) à l'aide de la position de la vanne (29) de la boucle de recirculation (20) sans utiliser ladite valeur de la différence de pression.

**Fig. 1**

**Fig. 2**

Europäisches
Patentamt

European
Patent Office

Office européen
des brevets

**RAPPORT DE RECHERCHE EUROPEENNE**

Numéro de la demande

EP 14 18 6323

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2010/010246 A2 (VALEO SYS CONTROLE MOTEUR SAS [FR]; VITIELLO NICOLAS [FR]; POTTEAU SEB) 28 janvier 2010 (2010-01-28) * page 3, ligne 17 - ligne 21 * * page 6, ligne 15 - page 9, ligne 26 * ----- | 1-9 | INV. F02D41/00 G01F1/36 |
| Y | WO 2012/156618 A1 (VALEO SYS CONTROLE MOTEUR SAS [FR]; HODEBOURG GREGORY [FR]) 22 novembre 2012 (2012-11-22) * page 1, ligne 17 - ligne 20 * * page 2, ligne 8 - ligne 17 * * page 3, ligne 33 - page 4, ligne 22 * * page 7, ligne 7 - ligne 8 * * page 10, ligne 3 - ligne 23 * ----- | 1-9 | |
| A | US 2002/100463 A1 (JALIWALA SALIM A [US] ET AL) 1 août 2002 (2002-08-01) * abrégé; figure 1 * * alinéa [0061] - alinéa [0067] * ----- | 1-9 | |
| A | WO 01/75287 A1 (DETROIT DIESEL CORP [US]; KRESNO ADMIR M [US]) 11 octobre 2001 (2001-10-11) * page 3, ligne 26 - ligne 30 * * page 8, ligne 15 - page 13, ligne 10 * ----- | 1-9 | DOMAINES TECHNIQUES RECHERCHES (IPC)  F02D G01F |
| A | WO 2012/038639 A1 (VALEO SYS CONTROLE MOTEUR SAS [FR]; POTTEAU SEBASTIEN [FR]; VOGEL JEAN) 29 mars 2012 (2012-03-29) * abrégé * ----- | 1-9 | |

Le présent rapport a été établi pour toutes les revendications

| Lieu de la recherche | Date d'achèvement de la recherche | Examinateur |
|---|---|---|
| Munich | 14 novembre 2014 | Pisani, Francesca |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.** EP 14 18 6323

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-11-2014

| Document brevet cité au rapport de recherche | Date de publication | Membre(s) de la famille de brevet(s) | Date de publication |
|---|---|---|---|
| WO 2010010246 A2 | 28-01-2010 | CN 102105668 A<br>EP 2318680 A2<br>FR 2934323 A1<br>JP 2011528767 A<br>KR 20110052646 A<br>US 2011180048 A1<br>WO 2010010246 A2 | 22-06-2011<br>11-05-2011<br>29-01-2010<br>24-11-2011<br>18-05-2011<br>28-07-2011<br>28-01-2010 |
| WO 2012156618 A1 | 22-11-2012 | EP 2712397 A1<br>FR 2975134 A1<br>WO 2012156618 A1 | 02-04-2014<br>16-11-2012<br>22-11-2012 |
| US 2002100463 A1 | 01-08-2002 | US 2002100463 A1<br>WO 02061259 A1 | 01-08-2002<br>08-08-2002 |
| WO 0175287 A1 | 11-10-2001 | AU 4599101 A<br>CA 2404145 A1<br>EP 1272751 A1<br>JP 2003529712 A<br>MX PA02009365 A<br>US 6347519 B1<br>US 2002059797 A1<br>WO 0175287 A1 | 15-10-2001<br>11-10-2001<br>08-01-2003<br>07-10-2003<br>12-02-2003<br>19-02-2002<br>23-05-2002<br>11-10-2001 |
| WO 2012038639 A1 | 29-03-2012 | EP 2619431 A1<br>FR 2965016 A1<br>WO 2012038639 A1 | 31-07-2013<br>23-03-2012<br>29-03-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- WO 2012038639 A

- WO 2010010246 A